# EUROPÄISCHE PATENTSCHRIFT

(11) **EP 2 180 951 B1**
(45) Veröffentlichungstag und Bekanntmachung des Hinweises auf die Patenterteilung: **18.09.2019**
(21) Anmeldenummer: 08787351.9
(22) Anmeldetag: 20.08.2008
(51) Int. Cl.: B01L 3/00, G01F 1/00, G01N 35/00

(54) **DURCHFLUSSSENSOR UND HERSTELLUNGSVERFAHREN DAFÜR**
FLOW SENSOR AND PRODUCTION METHOD THEREOF
CAPTEUR DE DÉBIT ET SON PROCÉDÉ DE FABRICATION

(30) Priorität: 21.08.2007 EP 07405244
(43) Veröffentlichungstag der Anmeldung: 05.05.2010
(73) Patentinhaber: Belimo Holding AG, 8340 Hinwil (CH)
(72) Erfinder: HOLOCH, Philip, 8484 Weisslingen (CH); MEGNET, Karin, 8630 Rüti (CH); STÄHELI, Curdin, 8620 Wetzikon (CH)
(74) Vertreter: Detken, Andreas
(86) Internationale Anmeldenummer: PCT/EP2008/060903
(87) Internationale Veröffentlichungsnummer: WO 2009/024589

(56) Entgegenhaltungen:
- WO-A-02/12734
- WO-A-2004/024326
- US-A1- 2002 194 909
- US-A1- 2004 197 843
- US-A1- 2006 210 445
- BECKER HOLGER ET AL: "Polymer microfluidic devices" TALANTA, Bd. 56, Nr. 2, 11. Februar 2002 (2002-02-11), Seiten 267-287, XP002473389 ISSN: 0039-9140

## Beschreibung

### Technisches Gebiet

Die vorliegende Erfindung betrifft einen Durchflusssensor und ein Verfahren zur Herstellung des Durchflusssensors, insbesondere ein Durchflusssensor zur Messung des Flusses von Fluiden, insbesondere zur Messung des Flusses von Luft und anderen Gasen. Die vorliegende Erfindung betrifft insbesondere einen Durchflusssensor und ein Verfahren zur Herstellung des Durchflusssensors, der einen Grundkörper mit einem Durchflusskanal, ein an den Durchflusskanal angrenzendes Durchflusssensorelement, und eine auf dem Grundkörper angeordnete, den Durchflusskanal abdeckende Deckplatte umfasst.

### Stand der Technik

In EP 1 182 432 wird ein aus zwei Gehäuseteilen bestehender Flusssensor für die Flussmessung von Fluiden beschrieben, welcher einen zwischen den Gehäuseteilen angeordneten Halbleiterchip mit Sensoranordnung umfasst. Der Halbleiterchip liegt an einem als Nut in einem der Gehäuseteile ausgebildeten Messkanal. Zwischen den Gehäuseteilen ist zudem ein Dichtungsring angeordnet. Eine Leiterbahnfolie wird vom Halbleiterchip zwischen dem Dichtungsring und dem anderen der Gehäuseteile nach aussen geführt. Durch den Dichtungsring wird zwar der Messkanal im Bereich des Spalts zwischen den Gehäuseteilen nach aussen abgedichtet, es erfolgt jedoch keine Abdichtung des Messkanals gegenüber dem Spalt zwischen den Gehäuseteilen.

Von der Firma Gruner AG, Bürglestrasse 15-17, in 78564 Wehingen, Deutschland wird ein weiterer Flusssensor beschrieben, der aus zwei Teilen und einem Halbleiter-Sensorelement besteht. Zwischen den beiden Teilen wird ebenfalls ein Messkanal gebildet, in den das Sensorelement eingefügt ist. Die beiden Teile werden direkt miteinander verklebt, so dass der Messkanal grösstenteils vom Spalt zwischen den beiden Teilen abgedichtet ist. Es ist jedoch kaum möglich eine perfekte Abdichtung des Messkanals vom Spalt zwischen den Teilen zu erreichen und gleichzeitig ein Eindringen von Klebstoff in den Messkanal völlig zu verhindern.

Durch Verbindungen vom Messkanal zum Spalt zwischen den Gehäuseteilen und durch Leimablagerungen im Messkanal können Ansammlungen von Verschmutzungen entstehen, die eine turbulente Durchströmung des Messkanals verursachen und damit die Qualität der Flussmessung beeinträchtigen können.

Aus der US 2006/210445 A1 ist ein Mikrofluidkanäle aufweisender Sensor bekannt, bei dem seitliche Dichtungslippen aus elastischem Material hergestellt sind. Durch Anordnen verschiedener Mikrofluidkanäle nebeneinander lässt sich ein hohes Aspektverhältnis erreichen.

Aus der WO 2004/204326 ist eine Einwegkassette zum Einsatz in der Analysentechnik bekannt, die aus einem ersten Teil mit darin ausgebildeten Kanalstrukturen und einem dieses dichtend abdeckenden zweiten Teil besteht. Das erste Teil weist starre und flexible Bereiche auf und ist im Zweikomponenten-Spritzgussverfahren einstückig hergestellt. Auf die flexiblen Bereiche wirken Aktorelemente zur Steuerung eines Fluidstroms ein.

WO 02/12734 A offenbart einen Durchflusssensor gemäß der Präambel des Anspruchs 1.

### Darstellung der Erfindung

Es ist eine Aufgabe der vorliegenden Erfindung einen Durchflusssensor und ein Verfahren zur Herstellung des Durchflusssensors vorzuschlagen, welche mindestens nicht gewisse Nachteile des Stands der Technik aufweisen. Es ist insbesondere eine Aufgabe der vorliegenden Erfindung einen Durchflusssensor und ein Verfahren zur Herstellung des Durchflusssensors vorzuschlagen, welche ermöglichen, den Durchfluss mittels eines Durchflusssensorelements in einem Durchflusskanal zu messen, der eine geringere Anfälligkeit für die Ablagerung von Schmutzpartikeln im Durchflusskanal aufweist.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Der Durchflusssensor umfasst einen Grundkörper mit einem Durchflusskanal, ein an den Durchflusskanal angrenzendes Durchflusssensorelement und eine auf dem Grundkörper angeordnete, den Durchflusskanal abdeckende Deckplatte.

Die oben genannten Ziele werden durch die vorliegende Erfindung insbesondere dadurch erreicht, dass der Durchflusskanal durch eine Dichtungslippe gebildet wird, welche den Durchflusskanal auf einer der Deckplatte gegenüberliegenden Oberseite des Grundkörpers umlaufend begrenzt und dichtend an die Deckplatte angepresst ist. Im Unterschied zum Stand der Technik wird somit nicht ein Spalt zwischen dem Grundköper und der Deckplatte von der Aussenwelt abgedichtet, sondern durch die Ausbildung des Durchflusskanals mittels der Dichtungslippe wird der Durchflusskanal selber von möglichen Spalten zwischen dem Grundköper und der Deckplatte und damit auch von der Aussenwelt abgedichtet. Die Dichtungslippe bildet vorzugsweise auf der Oberseite des Grundkörpers einen Durchflusskanal mit mehrfach mäandrierendem Verlauf, wodurch auf kleiner Fläche eine grössere Länge des Durchflusskanals erreicht werden kann, was für eine laminare Strömung förderlich ist. Die Dichtungslippe dichtet den Durchflusskanal zudem gegenüber der Deckplatte ab, so dass durch die Dichtungslippe und die Deckplatte ein Durchflusskanal mit einem ebenen Kanalbett auf der Oberseite des Grundkörpers gebildet wird, der glatte Begrenzungsflächen und einen konstanten Querschnitt aufweist, und der eine Ablagerung und Ansammlung von Schmutzpartikeln möglichst vermeidet und gegebenenfalls ein Eindringen von Klebstoffen beim Befestigen der Deckplatte auf dem Grundkörper in den Durchflusskanal verhindert. Dadurch können unerwünschte Turbulenzen im Durchflusskanal verhindert und eine laminare Strömung durch den Durchflusskanal bewirkt werden.

Dabei ist der Grundkörper aus einem ersten und einem zweiten Bereich gebildet, die jeweils aus einem unterschiedlichen Material bestehen und miteinander verbunden sind, wobei der Durchflusskanal im ersten Bereich ausgebildet ist, der im Vergleich zum zweiten Bereich aus einem wesentlich elastischeren Material besteht. Die beiden Bereiche werden vorzugsweise im Zweikomponenten-Spritzgussverfahren hergestellt und stehen vorzugsweise im Materialverbund. Durch die Ausbildung des Durchflusskanals im elastischen Materialbereich, wird die Dichtungslippe elastisch und einstückig mit dem Kanalbett gebildet. Der zweite Bereich ist dabei so ausgestaltet, dass eine gegenüber einem Kanalbett des Durchflusskanals definierte Oberflächenebene besteht, die zwischen der Ebene des Kanalbetts und den über sie hinaus ragenden Dichtungslippen liegt, so dass an allen Stellen der Dichtfläche zwischen Deckplatte und Dichtungslippe eine vorbestimmte Dichtkraft besteht, die in einfacher wohldefinierter Weise erreichbar ist.

In einer Ausführungsvariante umfasst der Grundkörper im zweiten, nicht-elastischen Bereich gebildete Anschlüsse für ein Durchflussmedium, vorzugsweise Luft oder andere Gase. Die Anschlüsse sind jeweils über eine Bohrung mit einem der Enden des Durchflusskanals verbunden.

In einer weiteren bevorzugten Ausführungsvariante ist das Durchflusssensorelement über dem Durchflusskanal in die Deckplatte eingelassen und bildet mit der Deckplatte eine im Wesentlichen plane Decke des Durchflusskanals. Dadurch, dass das Durchflusssensorelement bündig in die Deckplatte eingelassen ist und mit der Deckplatte eine plane Decke des Durchflusskanals bildet, werden wiederum Turbulenzen und damit die Ablagerung und Ansammlung von Schmutzpartikeln am Übergang zwischen Deckplatte und Durchflusssensorelement vermieden.

In einer weiteren Ausführungsvariante ist die Dichtungslippe bei entfernter Deckplatte am von der Oberseite des Grundkörpers abgewandten Ende verjüngt. Das heisst die Dichtungslippe ist an dem Ende verjüngt, das beim Befestigen der Deckplatte am Grundkörper elastisch an die Deckplatte angepresst wird. Durch die Verjüngung der Dichtungslippe kann die durch das Anpressen der Deckplatte bewirkte elastische Verformung der Dichtungslippe so kompensiert werden, dass bei befestigter Deckplatte ein im Wesentlichen rechteckiger Querschnitt des Durchflusskanals gebildet wird, der keine signifikante Verformung an den durch die Dichtungslippe gebildeten Seitenwänden des Durchflusskanals aufweist.

In der Erfindung ist der Durchflusskanal auf einem Kanalbett auf der Oberseite des Grundkörpers so ausgebildet ist, dass der Durchflusskanal im Querschnitt jeweils seitlich durch die vom Kanalbett hoch stehenden Dichtungslippen von einem den Durchflusskanal umlaufenden Aussenkanal abgegrenzt wird. Mit anderen Worten die Dichtungslippe ist so auf einem Kanalbett angeordnet, dass das Kanalbett im Querschnitt betrachtet durch die Dichtungslippe in drei Bereiche abgegrenzt wird: den mittig auf dem Kanalbett angeordneten Durchflusskanal und zwei Aussenkanäle, die jeweils durch die Dichtungslippe vom Durchflusskanal abgegrenzt werden. Die Aussenkanäle ermöglichen beispielsweise die Aufnahme von gegebenenfalls für die Befestigung der Deckplatte auf dem Grundkörper verwendeten überschüssigen Klebstoffen ohne Beeinträchtigung des Durchflusskanals oder von überschüssigem Dichtungslippenmaterial. Es sei angemerkt, dass sich Elastomere im Volumen nicht verkleinern lassen, sondern nur an einen anderen Ort verschoben werden können.

Die vorliegende Erfindung bezieht sich zudem auf ein Verfahren zur Herstellung des Durchflusssensors, in welchem Verfahren ein Grundkörper mit einem Durchflusskanal bereitgestellt wird, ein Durchflusssensorelement angrenzend an den Durchflusskanal angeordnet wird, der Durchflusskanal durch Befestigen einer Deckplatte auf dem Grundkörper abgedeckt wird, und der Grundkörper mittels Spritzguss so hergestellt wird, dass auf einer der Deckplatte gegenüberliegenden Oberseite des Grundkörpers eine Dichtungslippe gebildet wird, welche den Durchflusskanal auf der Oberseite des Grundkörpers umlaufend begrenzt und beim Befestigen der Deckplatte auf dem Grundkörper dichtend an die Deckplatte anpresst. Der Durchflusssensor mit den oben angeführten Vorteilen der geringen Verschmutzungsanfälligkeit und der laminaren Strömung durch den Durchflusskanal kann somit effizient und kostengünstig hergestellt werden, durch einfache Befestigung der Deckplatte mit bündig eingelassenem Durchflusssensorelement am spritzgusstechnisch hergestellten Grundkörper. Der Grundkörper wird dabei vorzugsweise im Zweikomponenten-Spritzgussverfahren mit einem ersten und einem zweiten Bereich gebildet, die jeweils aus einem unterschiedlichen Material bestehen und miteinander verbunden sind, wobei der Durchflusskanal im ersten Bereich ausgebildet wird, der im Vergleich zum zweiten Bereich aus einem wesentlich elastischeren Material besteht.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Querschnittdiagramm, welches schematisch einen Querschnitt durch einen Durchflusssensor darstellt, welcher einen Grundkörper mit Anschlüssen und Durchflusskanal sowie eine Deckplatte mit Durchflusssensorelement umfasst.
Figur 2 zeigt ein Aufsichtsdiagramm, das schematisch eine Aufsicht des Grundkörpers ohne befestigte Deckplatte darstellt, welcher Anschlüsse und einen damit verbundenen, durch Dichtungslippen gebildeten Durchflusskanal umfasst.
Figur 3a, 3b, 3c und 3d zeigen verschiedene Ausführungsvarianten des Durchflusssensors mit unterschiedlich angeordneten Anschlüssen.
Figur 4a zeigt ein Querschnittdiagramm, welches schematisch einen Querschnitt durch einen Bereich des Durchflusskanals quer zur Durchflussrichtung darstellt, wenn die Deckplatte noch nicht auf dem Grundkörper befestigt ist.
Figur 4b zeigt ein Querschnittdiagramm, welches schematisch einen Querschnitt durch den Bereich des Durchflusskanals quer zur Durchflussrichtung darstellt, wenn die Deckplatte auf dem Grundkörper angebracht ist.
Figur 4c zeigt ein Querschnittdiagramm, welches schematisch einen Querschnitt durch einen Bereich des Durchflusskanals gemäss einer weiteren Ausführungsvariante quer zur Durchflussrichtung darstellt, wenn die Deckplatte noch nicht auf dem Grundkörper befestigt ist.
Figur 4d zeigt ein Querschnittdiagramm, welches schematisch einen Querschnitt durch den Bereich des Durchflusskanals gemäss der weiteren Ausführungsvariante quer zur Durchflussrichtung darstellt, wenn die Deckplatte auf dem Grundkörper angebracht ist.
Figur 5 zeigt ein Aufsichtsdiagramm, das schematisch eine weitere Aufsicht des Grundkörpers ohne befestigte Deckplatte darstellt, welcher Anschlüsse und einen damit verbundenen, durch Dichtungslippen gebildeten Durchflusskanal umfasst.
Figur 6 zeigt ein Querschnittdiagramm, welches schematisch einen Querschnitt durch einen Bereich des Durchflusskanals entlang der Durchflussrichtung darstellt, in welchem Bereich das Durchflusssensorelement angeordnet ist.
Figur 7a zeigt ein Querschnittdiagramm, welches schematisch einen Querschnitt durch einen Bereich des Durchflusskanals gemäss einer weiteren Ausführungsvariante quer zur Durchflussrichtung darstellt, wenn die Deckplatte noch nicht auf dem Grundkörper befestigt ist.
Figur 7b zeigt ein Querschnittdiagramm, welches schematisch einen Querschnitt durch den Bereich des Durchflusskanals gemäss einer weiteren Ausführungsvariante quer zur Durchflussrichtung darstellt, wenn die Deckplatte auf dem Grundkörper angebracht ist.
Figur 8 zeigt ein Querschnittdiagramm, welches schematisch einen Querschnitt durch den Bereich einer Deckplatte mit eingelassenem Durchflusssensorelement mit die Deckplatte durchstossender Signalherausführung zeigt.
Figur 9 zeigt eine Unteransicht, welche schematisch eine Deckplatte von unten im Bereich eines Durchflusskanals mit im Querschnitt dargestellten Dichtlippen und mit eingelassenem Durchflusssensorelement mit seitlich zu einem weiteren Bereich der Deckplatte führenden Signalherausführungen zeigt.
Figur 10 zeigt eine Unteransicht, welche schematisch eine Deckplatte von unten im Bereich eines Durchflusskanals mit im Querschnitt dargestellten Dichtlippen und mit eingelassenem Durchflusssensorelement mit aktiver Sensorfläche und mit seitlich zu einem weiteren Bereich der Deckplatte führenden Signalherausführungen zeigt.
Figur 11 zeigt ein Querschnittdiagramm, welches schematisch einen Querschnitt durch den Bereich der Deckplatte mit eingelassenem Durchflusssensorelement mit die Deckplatte durchstossender Signalherausführung nach Figur 10 zeigt.

### Wege zur Ausführung der Erfindung

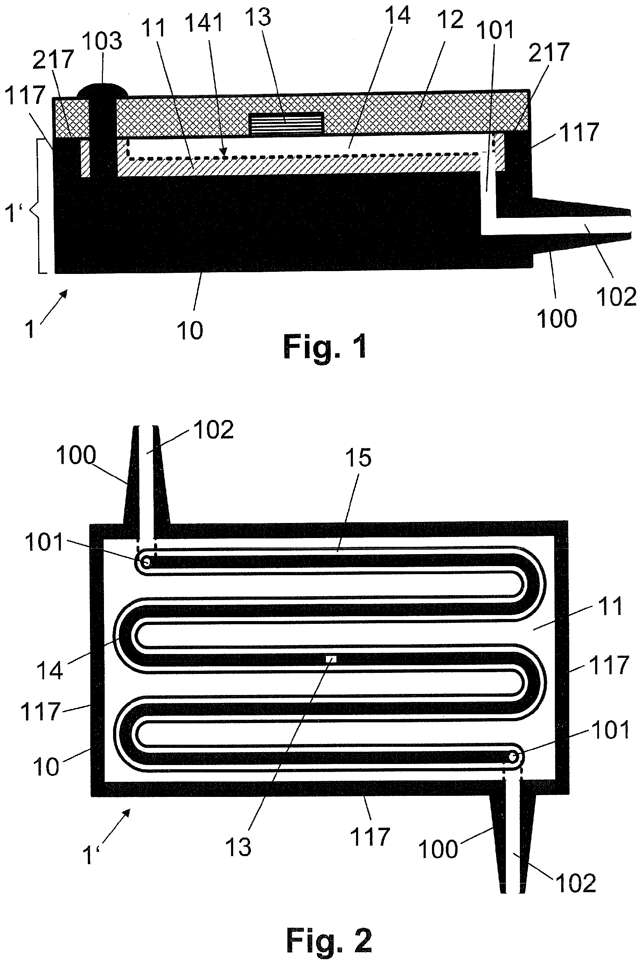

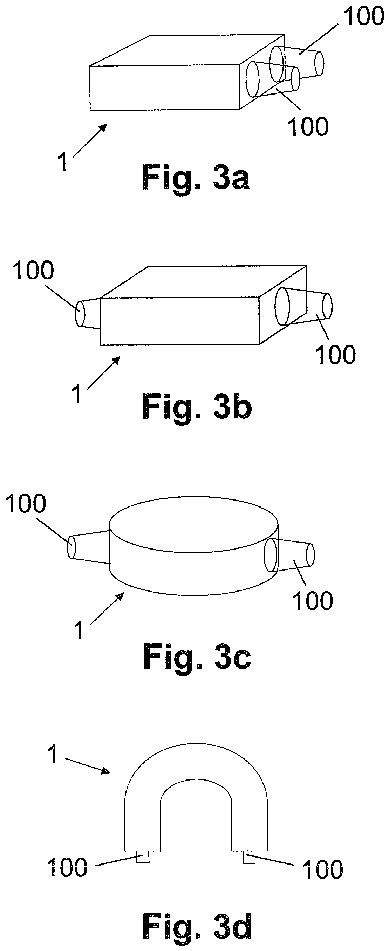

In den Figuren 1, 3a, 3b, 3c und 3d bezeichnet das Bezugszeichen 1 einen Durchflusssensor zum Messen des Flusses von Fluiden, vorzugsweise von Luft oder anderen Gasen. Wie in der Figur 1 schematisch dargestellt ist, umfasst der Durchflusssensor 1 eine Deckplatte 12 und einen Grundkörper 1', der in verschiedenen Ausführungsvarianten auch in den Figuren 2, 5, 7a und 7b dargestellt ist. Die Deckplatte 12 ist auf dem Grundkörper 1' angebracht und mit dem Grundkörper 1' befestigt, beispielsweise mittels Nieten 103, Schrauben, Klebstoff oder durch Verschweissen. Die Deckplatte 12 ist beispielsweise eine plan ausgeführte elektronische Leiterplatte (Elektronik-Printplatte) aus Epoxid.

Der Grundkörper 1' umfasst einen nicht-elastischen Bereich 10 und einen damit verbundenen elastischen Bereich 11. Der elastische Bereich 11 ist auf dem nicht-elastischen Bereich 10 liegend angeordnet. Der nicht-elastische, oder zumindest im Vergleich zum elastischen Bereich 11 wesentlich weniger elastische und härtere Bereich 10 besteht beispielsweise aus einem Kunststoff wie Nylonpolyamid. Der elastische (weichere) Bereich 11 besteht beispielsweise aus einem thermoplastischen Material, z.B. ein Material auf der Basis von Polyäthylen. Der Grundkörper 1' wird vorzugsweise im Zweikomponenten-Spritzgussverfahren hergestellt. Im Zweikomponenten-Spritzgussverfahren werden die elastischen und nicht-elastischen Bereiche 10, 11 beispielsweise über eine Materialverbindung oder zumindest formschlüssig miteinander verbunden. In einer weniger bevorzugten Ausführungsvariante werden der elastische Bereich 11 und der nicht-elastische Bereich 10 als separate Teile hergestellt, z.B. als Grundplatte und Kanalplatte, die miteinander verbunden werden, beispielsweise durch Kleben.

Wie in den Figuren 1, 2 und 5 dargestellt ist, umfasst der nicht-elastische Bereich 10 (die Grundplatte) zwei Anschlüsse 100 für das Zuführen und Wegführen des Durchflussmediums. Die Anschlüsse 100 sind vorzugsweise für das Anbringen von Schläuchen ausgeführt, welche beispielsweise einen Innendurchmesser von 6mm aufweisen. Die Anschlüsse 100 sind konisch ausgestaltet und beispielsweise mit radialen Rippen versehen. Die Anschlüsse 100 weisen eine Innenbohrung 102 mit einem Durchmesser von ca. 0.5mm auf.

In den Figuren 3a, 3b, 3c und 3d sind Beispiele mit verschiedenen Anordnungen der Anschlüsse 100 dargestellt. In der bevorzugten Ausführung gemäss Figur 3a ist der Durchflusssensor 1 quaderförmig ausgestaltet und die Anschlüsse 100 sind auf einer gemeinsamen Seite (z.B. Stirnseite) des Quaders nebeneinander angeordnet. In der Ausführung gemäss Figur 3b ist der Durchflusssensor 1 quaderförmig ausgestaltet und die Anschlüsse 100 sind auf verschiedenen Seiten des Quaders angeordnet, beispielsweise auf gegenüberliegenden Seiten entlang einer gemeinsamen Achse. In der Ausführung gemäss Figur 3c ist der Durchflusssensor 1 zylinderförmig ausgestaltet und die Anschlüsse 100 sind gegenüberliegend entlang einer gemeinsamen Achse angeordnet. In der Ausführung gemäss Figur 3d ist der Durchflusssensor 1 U-förmig ausgestaltet und die Anschlüsse 100 sind jeweils an einem der beiden Enden der U-Form (Hufeisen) angeordnet.

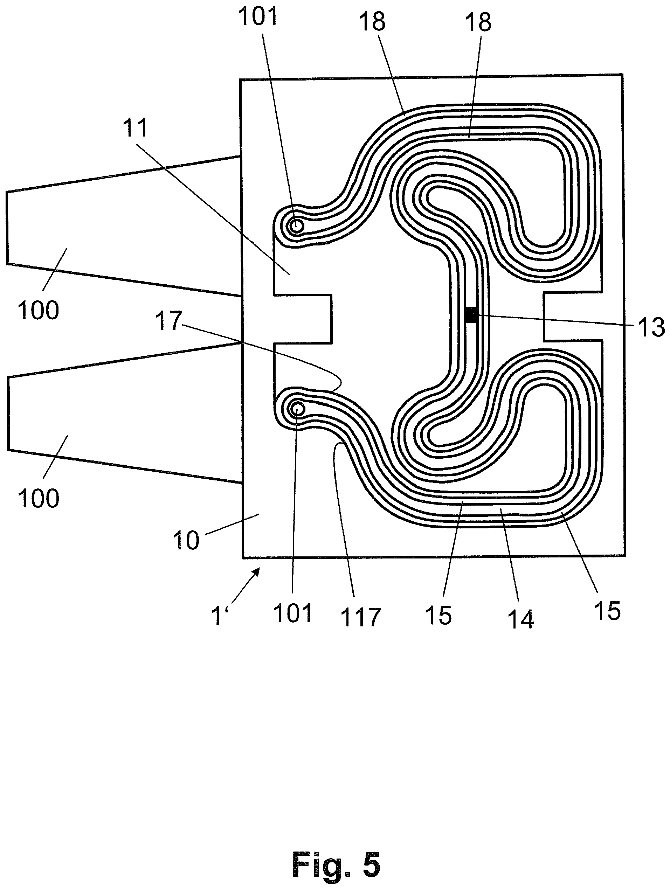

Wie in den Figuren 1, 2, 5, 7a und 7b dargestellt ist, umfasst der elastische Bereich 11 (die Kanalplatte) einen Durchflusskanal 14. Der Durchflusskanal 14 weist ein eben verlaufendes Kanalbett 141 mit glatter Oberfläche auf und wird durch die parallel zum Kanalbett 141 angeordnete Deckplatte 12 abgedeckt. Wie in den Figuren 2 und 5 ersichtlich ist, weist der Durchflusskanal 14 einen zwischen seinen beiden Enden mehrfach mäandrierenden Verlauf auf. An seinen beiden Enden ist der Durchflusskanal jeweils durch eine Bohrung 101 mit der Innenbohrung 102 eines der Anschlüsse 100 verbunden. Die Bohrungen 101 verlaufen vom Kanalbett 141 durch den elastischen Bereich 11 und den nicht-elastischen Bereich 10 zu den Innenbohrungen 102 der Anschlüsse 100 und sind beispielsweise senkrecht zum Kanalbett 141 und zu den Innenbohrungen 102 angeordnet.

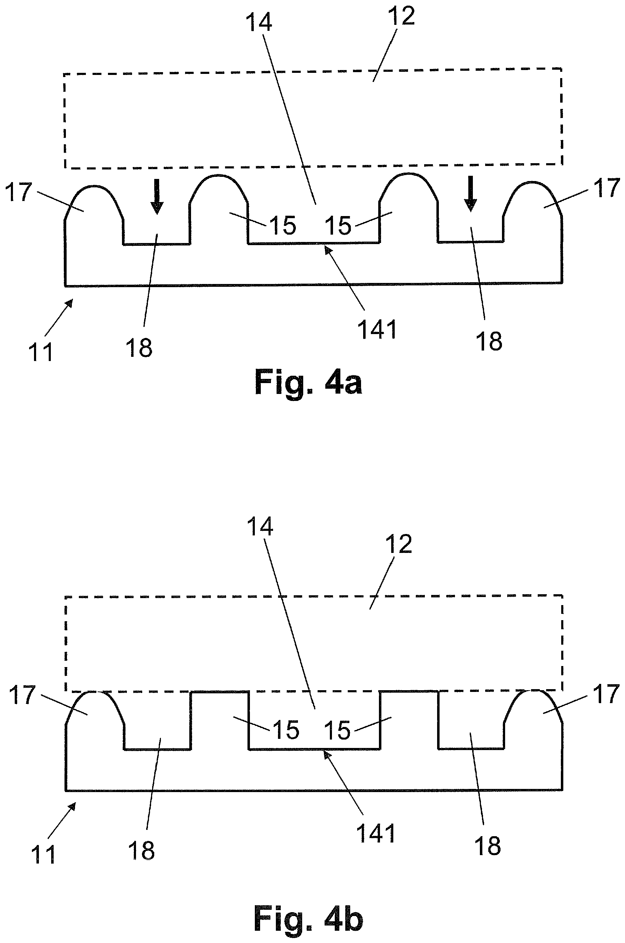

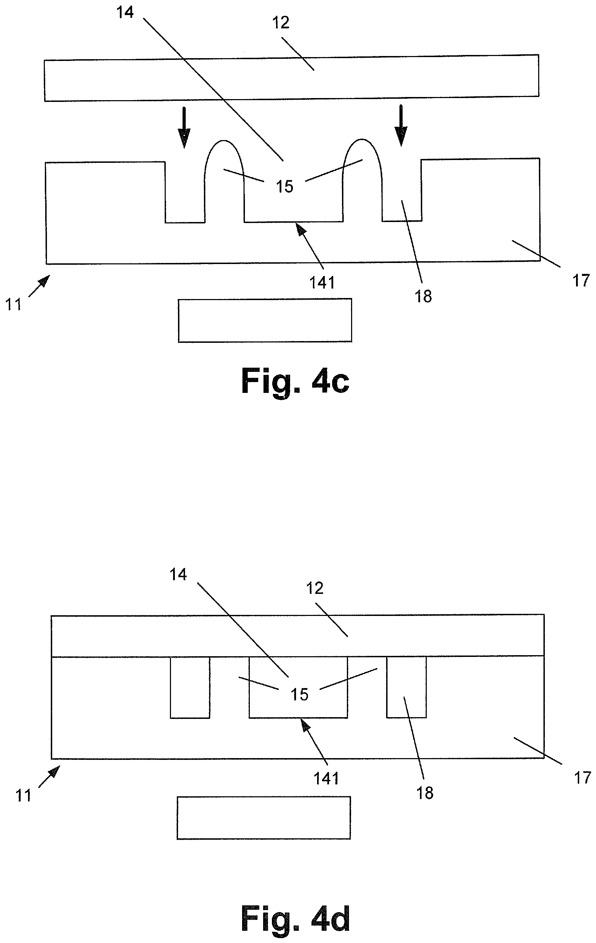

Wie in den Figuren 2, 4a, 4b, 4c, 4d, 5, 7a und 7b dargestellt ist, umfasst der elastische Bereich 11 eine Dichtungslippe 15, welche auf dem Kanalbett 141 stehend angeordnet ist und sich vom Kanalbett 141 zur Deckplatte 12 erstreckt. Der Durchflusskanal 14 wird durch die Dichtungslippe 15 gebildet, welche das Kanalbett 141 des Durchflusskanals 14 umläuft und den Durchflusskanal 14 auf dem Kanalbett 141 entlang der Durchflussrichtung seitlich begrenzt. Wie in den Figuren 4a und 4c im Querschnitt quer zur Durchflussrichtung des Durchflusskanals 14 dargestellt ist, weist die Dichtungslippe 15 am vom Kanalbett 141 abgewandten Ende eine Verjüngung auf, wenn die Deckplatte 12 noch nicht auf dem Grundkörper 1' angebracht ist. Wenn die Deckplatte 12 auf dem Grundkörper 1' angebracht ist, wird die Dichtungslippe 15 zusammengepresst, wie in den Figuren 4b, 4d schematisch illustriert wird, und die Dichtungslippe 15 dichtet den Durchflusskanal 14 gegen die Deckplatte 12 ab. Die Deckplatte 12, das Kanalbett 141 und die Dichtungslippe 15 weisen jeweils glatt Oberflächen auf und bilden Grenzflächen, welche den Durchflusskanal 14 bilden und einen konstanten, vorzugsweise rechteckigen Querschnitt definieren. Der Querschnitt des Durchflusskanals 14 weist beispielsweise eine Tiefe von 0.3mm und eine Breite von 0.8mm auf. Die Länge des Durchflusskanals 14 beträgt beispielsweise 100mm. Somit weist der Durchflusskanal 14 eine im Verhältnis zu seinem Querschnitt grosse Länge auf, beispielsweise bewegt sich das Verhältnis von Länge zu Breite respektive Länge zu Tiefe des Durchflusskanals 14 im Bereich von ca. 100:1 bis 400:1. Die Reynolds-Zahl des Durchflusskanals 14 beträgt ca. 50, was eine turbulenz- und wirbelfreie laminare Strömung bewirkt.

In den Ausführungsvarianten gemäss Figuren 4a, 4b, 4c, 4d und 5 wird der durch die Dichtungslippe 15 gebildete Durchflusskanal 14 von einem Aussenkanal 18 umlaufen, der durch die Ränder 17 des elastischen Bereichs 11 und durch die Dichtungslippen 15 begrenzt wird.

In den Ausführungsvarianten gemäss Figuren 1, 5, 7a und 7b wird der durch die Dichtungslippe 15 gebildete Durchflusskanal 14 von einem Aussenkanal 18 umlaufen, über den gesamten Sensorgrundkörper 1' gesehen durch die Ränder 117 des nicht-elastischen Bereichs 10 und durch die Dichtungslippen 15 begrenzt wird. Diese Ränder 117 des nicht-elastischen Bereichs 10 können auch Abstandshalter 117 oder Referenzebenenstege 117 genannt werden. In der Figur 1 sind diese Abstandshalter 117 die hier an zwei gegenüberliegenden Enden des nicht-elastischen Körpers 10 in den Bereich des elastischen Bereichs 11 also des Grundkörpers 1' ragenden Stege. Sie bilden die mit ihrer umlaufenden Gehäuseoberfläche eine Referenzebene 217. In der Figur 2 sind diese Abstandshalter als umlaufenden Gehäuserandstege 117 eingezeichnet. Die Abstandshalter 117 müssen nicht umlaufend angeordnet sein. Es ist ausreichend, wenn diese so ausgestaltet sind, dass eine gegenüber dem Kanalbett 141 definierte Oberflächenebene 217 erzeugt wird, die tiefer als die über sie hinaus ragenden Dichtungslippen 15 liegen.

In der Figur 5 ist beispielhaft in der Nähe eines Anschlusses 101 an zwei gegenüberliegenden Stellen der in den anderen Figuren mit dem Bezugszeichen 17 versehene elastische Steg des elastischen Bereichs 11 und der in den anderen Figuren mit dem Bezugszeichen 117 versehene nicht-elastische Steg des nicht elastischen Gehäuseteils 10 eingezeichnet.

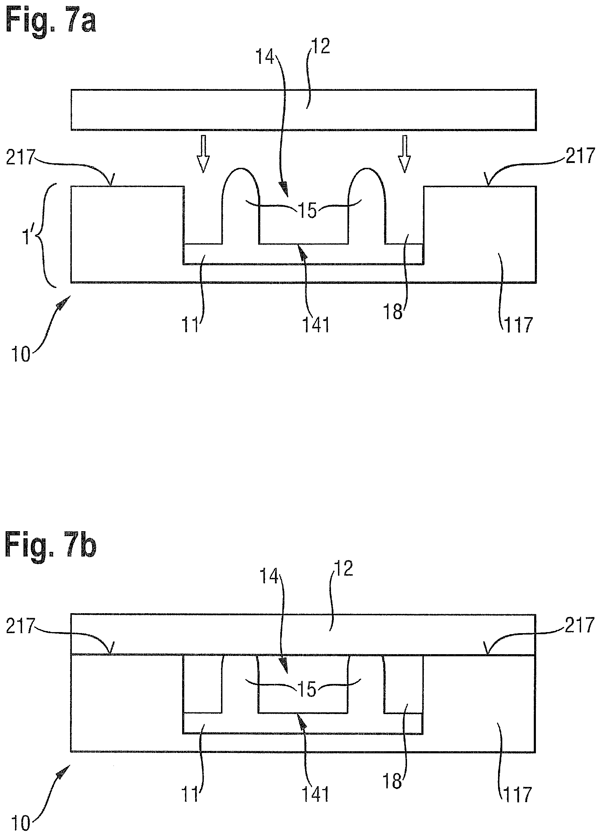

Insbesondere in den Figuren 7a und 7b ist erkennbar, dass mit den nicht-elastischen Abstandshaltern 117 eine Referenzebene 217 definiert wird, die - gegenüber dem Kanalbett 141 - tiefer als die über sie hinaus ragenden Dichtungslippen 15 liegen. Somit ist klar ersichtlich, dass bei einem Herabsenken der Deckplatte 12, sehr einfach in definierter Weise die Dichtungslippen 15 komprimiert werden, so dass eine definiert Dichtoberfläche geschaffen wird, die den Kanal 14 umseitig begrenzt. Hierfür ist es Dichtungslippen 15 vorteilhaft, dass die Hohlräume 18 verbleiben, damit die Dichtungslippen 15 den notwendigen Platz für das Einnehmen ihrer Endlage haben. Durch die Verwendung von zwei nicht-elastischen Plattenmaterialien 10 und 12, die sich in dem Bereich der Oberfläche 217 definiert treffen, kann in einfacher Weise ein sehr langer Kanalweg 14, also ein hohes Aspektverhältnis, durch eine mäandrierende Form erreicht werden. Die in dem Wort Mäander zum Ausdruck kommende Kurvenform des Kanals verbessert den laminaren Fluss. Es wäre aber auch möglich mehrere Kanäle 14 direkt nebeneinander anzuordnen und die Umlenkung an einer Seite jeweils über eine mehr oder weniger U-förmige 180° Umlenkung auszugestalten.

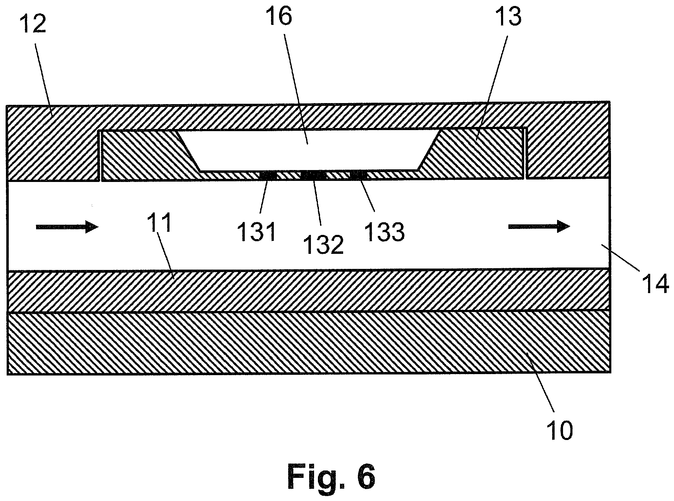

Wie in den Figuren 1 und 6 schematisch illustriert ist, umfasst der Durchflusssensor 1 ein Durchflusssensorelement 13, das in die Deckplatte 12 eingelassen ist und an den Durchflusskanal 14 angrenzt. Das Durchflusssensorelement 13 ist bündig in die Deckplatte 12 eingelassen, so dass die Deckplatte 12 und das Durchflusssensorelement 13 eine im Wesentlichen plane Oberfläche zur Abdeckung des Durchflusskanals 14 bilden, um die Bildung von Wirbeln und Turbulenzen zu vermeiden. Vorzugsweise ist das Durchflusssensorelement 13 mit der Deckplatte 12 verklebt, es sind jedoch auch andere Befestigungsmittel möglich, beispielsweise Schrauben oder Schnappverschlüsse. Die Figur 6 zeigt einen Querschnitt durch ein Teilstück des Durchflusskanals 14 entlang der Durchflussrichtung, welcher ein Beispiel einer bündigen Anordnung des Durchflusssensorelements 13 in der Deckplatte 12 illustriert. Das Durchflusssensorelement 13 weist einen ausgedünnten Bereich auf, welcher einen Hohlraum 16 zwischen dem Durchflusssensorelement 13 und der Deckplatte 12 bildet. Das Durchflusssensorelement 13 ist ein in Dünn- oder Dickschichttechnik hergestelltes Element, das mehrere Sensorelemente aufweist, beispielsweise mindestens ein oder zwei Temperatursensoren 131, 133, oder ein Differenztemperatursensor und ein Heizelement 133. Es ist auch möglich einen der Temperatursensoren 131, 133 als Heizelement zu verwenden. An dieser Stelle soll angefügt werden, dass die Mediumstemperatur sowohl im Durchflusskanal 14 als auch auf der elektronischen Leiterplatte der Deckplatte 12 erfasst werden kann, da durch den sehr geringen Durchfluss im Durchflusskanal 14 das Medium die Gehäusetemperatur des Durchflusssensors 1 annimmt, das heisst in einer Ausführungsvariante ist der Temperatursensor zur Bestimmung der Mediumtemperatur ausserhalb des Durchflusskanals 14 auf der Deckplatte 12 angeordnet. Die Sensorelemente 131, 132, 133 des Durchflusssensorelements 13 sind über Leiterbahnen mit einer auf der Deckplatte 12 angebrachten elektronischen Schaltung verbunden. Zur Auswertung der von den Sensorelementen 131, 132, 133 gelieferten Sensorsignalen umfasst die elektronische Schaltung vorzugsweise einen programmierbaren Prozessor, insbesondere einen PSoC (Programmable System on Chip) mit integriertem programmierbarem Analogteil (Verstärker, A/D-Wandler, etc). Gemessen wird entweder der Wärmeübertrag vom Heizelement 132 zu einem der Temperatursensoren 133 oder die Abkühlung des Heizelements 132 durch das vorbeiströmende Medium, um darauf basierend die Strömungsgeschwindigkeit und dadurch den Fluss im Durchflusskanal 14 zu bestimmen.

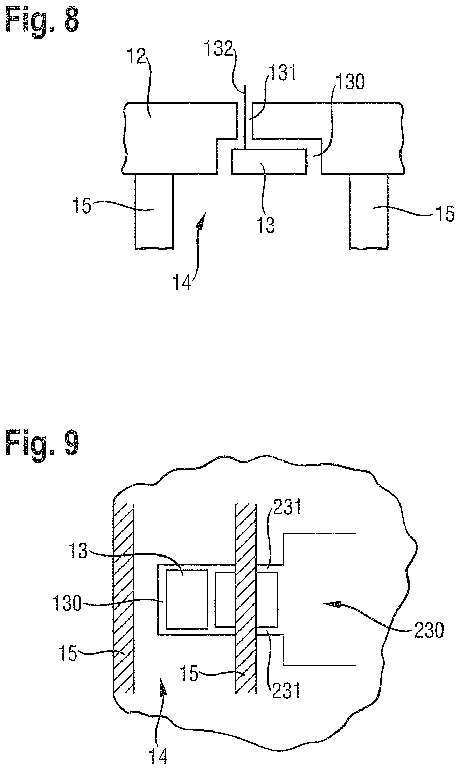

Die Signalherausführung kann beispielsweise in der in der Figur 8 dargestellten Art und Weise realisiert werden. Die Deckplatte 12 verfügt über einen Hohlraum 130, in dem das Durchflusssensorelement 13 mit einem oder mehreren Sensoren wie zu Figur 6 erläutert eingelassen ist. Es ist eine die Deckplatte 12 durchstossende Signalherausführung 132 in einem entsprechenden Kanal 131 dargestellt. Da vorzugsweise das Durchflusssensorelement 13 in dem Hohlraum 130 mit Hilfe von dichtendem Verfüllmaterial eingeschlossen ist, ist der Durchflusskanal 14, der schematisch angedeutet seitlich durch die Dichtungslippen 15 und (nicht dargestellt) durch das Kanalbett 141 begrenzt ist, sehr gut abgedichtet, um auch beispielsweise kleine Druckunterschiede gut messen zu können.

Die Figur 9 zeigt eine Unteransicht einer anderen Realisierung der Signalherausführung, welches insbesondere bei einer einseitigen Printplatte 12 vorteilhaft ist.. In einem Hohlraum in dem Print 12 ist das Durchflusssensorelement 13 eingelassen. In der Printplatte sind mindestens einer, vorteilhafterweise aber zwei getrennte Signalherausführungsnuten 231 vorgesehen, in denen Signalleiter als Kabel oder als Folie in einen Bereich 230 der Printplatte 12 zur weiteren Verarbeitung in dort vorgesehenen elektronischen Bauteilen geführt werden. Dabei sind die Hohlräume 130 und 231 mit einem Dichtungsmaterial gefüllt, so dass die Herausführung unterhalb der Dichtungslippe 15 die Funktion der Sensoren nicht beeinträchtigen.

Es ist damit klar, dass mit einem nicht-elastischen Grundkörper 10 mit Abstandshaltern 117 und eingesetztem oder eingespritztem elastischem Bereich 11 eine Vielzahl von Fluidkanälen 14 für einen Durchflusssensor geschaffen werden kann, da diese Fluidkanäle jeweils von drei Seiten (Bezugszeichen 15, 141 und 15) begrenzt sind und die Dichtung in sehr einfacher Weise durch eine aufzusetzende nicht-elastische Deckplatte 12 gewährleistet werden kann. Besonders vorteilhaft ist der Einsatz einer Printplatte als Deckplatte 12, da diese die nicht-elastische Eigenschaft hat und zudem direkt mit elektronischen Bausteinen zur Auswertung versehen werden kann, so dass sich ein sehr kompaktes Bauteil ergibt. Die Verwendung einer glatten Printplatte 12 gestattet als Gegenstück zu den elastischen Dichtlippen 15 eine beliebig definierte kurvende und als Mäander ausgelegte Form des Fluidkanals, so dass ein hohes Aspektverhältnis auf kleinstem Raum geschaffen werden kann, ohne einen laminaren Fluss zu gefährden.

Prinzipiell ist es auch möglich, durch entsprechende Oberflächengestaltung von Deckplatte 12 und Stegen 117 sicherzustellen, dass eine definierte räumliche Lage von Deckplatte 12 und Grundkörper 1 /1' erreicht wird, so dass das Sensorelement 13 und elektrische Anschlüsse an vorbestimmten Orten zu liegen kommen.

Obwohl in den Figuren 7a und 7b jeweils zwei Dichtungslippen 15 dargestellt sind, so zeigt die Figur 6, dass bei der entsprechenden Auslegung des elastischen Bereichs 11 mit Fluidanschlüssen durch den Boden hindurch eigentlich nur eine einzige torusförmige Dichtungslippe 15 vorliegt, die die vollständige seitliche Begrenzung des Fluidkanals 14 bildet.

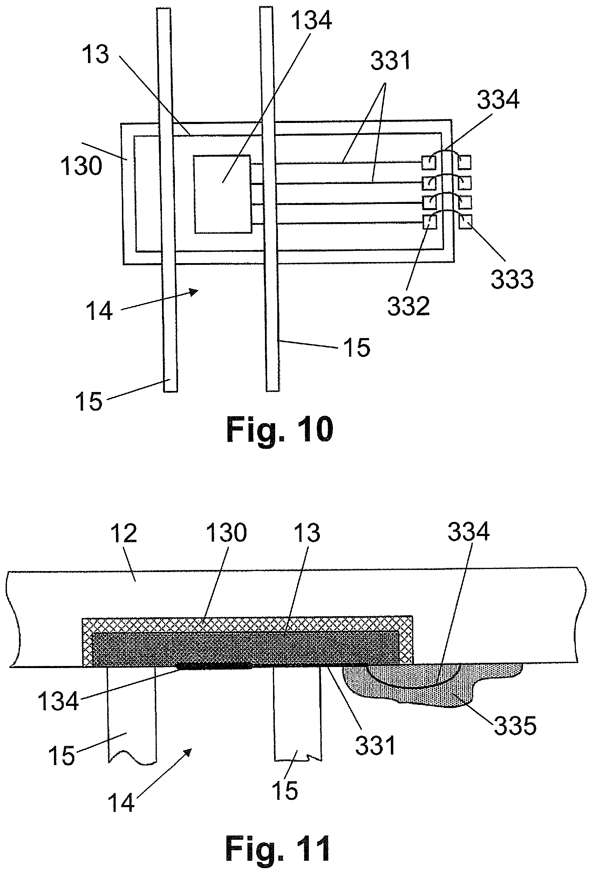

Die Figur 10 zeigt ein weiteres Ausführungsbeispiel der Signalherausführung. Unteransicht einer anderen Realisierung der Signalherausführung, welches insbesondere bei einer einseitigen Printplatte 12 vorteilhaft ist.. In einem Hohlraum in dem Print 12 ist das Durchflusssensorelement 13 eingelassen. Die aktive Sensorfläche hat das Bezugszeichen 134 erhalten, um ähnlich wie bei den der Figur 6 auf einzelne Sensoren hinzuweisen. Das Durchflusssensorelement 13 weist also seine eigene Printplatte auf, auf der mindestens zwei, hier vier getrennte Signalleitungen 331 vorgesehen sind, die in Kontaktflächen 332 des Sensorelementes 13 enden. Diese Kontaktflächen 332 des Sensorelementes 13 liegen Kontaktflächen 333 der Deckelplatte 12 gegenüber, von der dann nicht dargestellte Signalleitungen in konventioneller Weise fortgeführt werden.

Die Verbindungen zwischen den Kontaktflächen 332 und 333 werden durch Bonddrähte 334 geschaffen, die in der Seitenansicht der Figur 11 mit einer Vergussmasse 335 geschützt sind. Bei dem Ausführungsbeispiel der Figuren 10 und 11 ist das Sensorelement 13 also grösser als die Kanalbreite des Kanals 14, jedoch ist die sensorisch aktive Fläche 134 nur ein Teil davon. In einem weiteren Teil des Sensorelements 13 werden die Signalleitungen unter einer der Dichtlippen 15 hindurchgeführt.

Es wäre auch möglich, die altive Fläche 134 mittiger anzuornden und einen weiteren, schaltungstechnisch inaktiven Teil des Sensorelements 13 unter der anderen Dichtlippe hindurchzuführen. Der grösseren Symmetrie stehen die zusätzlichen Dichtkanäle der Füllmasse 130 gegenüber.

Der Übergang zur Deckelplatte oder Leiterplatte 12 geschieht hier mittels Bondtechnik. Die Bonddrähte 334 werden abschliessend noch durch eine Vergussmasse 335 geschützt.

## Patentansprüche

1. Durchflusssensor (1), umfassend:
einen Grundkörper (1') mit einem Durchflusskanal (14),
ein an den Durchflusskanal (14) angrenzendes Durchflusssensorelement (13, 134), und
eine auf dem Grundkörper (1') befestigte, den Durchflusskanal (14) abdeckende Deckplatte (12),
wobei der Durchflusskanal (14) durch eine Dichtungslippe (15) gebildet wird, welche den Durchflusskanal (14) auf einer der Deckplatte (12) gegenüberliegenden Oberseite des Grundkörpers (1') umlaufend begrenzt und dichtend an die Deckplatte (12) angepresst ist,
wobei der Grundkörper (1') aus einem ersten und einem zweiten Bereich (10, 11) gebildet ist, die jeweils aus einem unterschiedlichen Material bestehen und miteinander verbunden sind, wobei der Durchflusskanal (14) im ersten Bereich (11) ausgebildet ist, der im Vergleich zum zweiten Bereich (10) aus einem wesentlich elastischeren Material besteht, und dass der zweite Bereich (10) eine Oberfläche umfasst, welche eine Oberflächenebene (217) definiert, wobei die Deckplatte (12) auf der Oberflächenebene (217) aufliegt, wenn die Deckplatte (12) auf dem Grundkörper (1') befestigt ist, **dadurch gekennzeichnet, dass** die Oberflächenebene (217) bei entfernter Deckplatte (12) zwischen der Ebene eines Kanalbetts (141) des Durchflusskanals (14) und den über die Oberfläche des zweiten Bereichs (10) hinaus ragenden Dichtungslippen (15) liegt, und dass der Durchflusskanal (14) auf dem Kanalbett (141) auf der Oberseite des Grundkörpers (1') so ausgebildet ist, dass der Durchflusskanal (14) im Querschnitt jeweils seitlich durch die vom Kanalbett (141) hoch stehenden Dichtungslippen (15) und von einem den Durchflusskanal (14) umlaufenden Aussenkanal (18) abgegrenzt wird.

2. Durchflusssensor (1) nach Anspruch 1, **dadurch gekennzeichnet, dass** der Grundkörper (1') im zweiten Bereich (10) gebildete Anschlüsse (100) für ein Durchflussmedium umfasst, welche Anschlüsse (100) jeweils über eine Bohrung (101, 102) mit einem der Enden des Durchflusskanals (14) verbunden sind.

3. Durchflusssensor (1) nach einem der Ansprüche 1 bis 2, **dadurch gekennzeichnet, dass** das Durchflusssensorelement (13) über dem Durchflusskanal (14) in eine Ausnehmung (130) in der Deckplatte (12) eingelassen ist und mit der Deckplatte (12) eine im Wesentlichen plane Decke des Durchflusskanals (14) bildet, wobei ein isolierendes Verfüllmaterial die verbleibende Ausnehmung (130) mit der Deckplatte plan ausfüllt.

4. Durchflusssensor (1) nach Anspruch 3, **dadurch gekennzeichnet, dass** in der Deckplatte (12) mindestens eine im wesentlichen quer zur Fluidkanalrichtung verlaufende Nut (231) vorgesehen ist, die bei geschlossenem Durchflusssensor (1) unter der Dichtlippe (15) hindurch aus dem Durchflusskanal hinausführt, insbesondere zur Aufnahme eines Signalleiters.

5. Durchflusssensor (1) nach Anspruch 3, **dadurch gekennzeichnet, dass** die Ausnehmung (130) in der Deckplatte (12) ausgestaltet ist, so dass sie bei geschlossenem Durchflusssensor (1) unter mindestens einer der Dichtlippen (15) hindurch seitlich aus dem Durchflusskanal hinausführt ist, dass in dieser Ausnehmung ein Sensorelement (13) mit mindestens einer aktiven Sensorfläche (134) aufgenommen ist, dass das Sensorelement (13) über Signalleiter (331) verfügt, die zwischen der mindestens einen aktiven Sensorfläche (134) und dem Raum neben den Dichtlippen (15) zur Herausführung des Signals verlaufen.

6. Durchflusssensor (1) nach einem der Ansprüche 1 bis 5, **dadurch gekennzeichnet, dass** die Dichtungslippe (15) bei entfernter Deckplatte (12) am von der Oberseite des Grundkörpers (1') abgewandten Ende verjüngt ist.

7. Durchflusssensor (1) nach einem der Ansprüche 1 bis 6, **dadurch gekennzeichnet, dass** der Durchflusskanal (14) auf der Oberseite des Grundkörpers (1') mit mehrfach mäandrierendem Verlauf, glatten Begrenzungsflächen und konstantem Querschnitt ausgebildet ist und eine laminare Strömung durch den Durchflusskanal (14) bewirkt.

8. Verfahren zur Herstellung eines Durchflusssensors (1) nach einem der vorgehenden Ansprüche, umfassend:
Bereitstellen eines Grundkörpers (1') mit einem Durchflusskanal (14),
Anordnen eines Durchflusssensorelements (13) angrenzend an den Durchflusskanal (14), und
Abdecken des Durchflusskanals (14) durch Befestigen einer Deckplatte (12) auf dem Grundkörper (1'),
**dadurch gekennzeichnet,**
**dass** der Grundkörper (1') mittels Spritzguss so hergestellt wird, dass auf einer der Deckplatte (12) gegenüberliegenden Oberseite des Grundkörpers (1') eine Dichtungslippe (15) gebildet wird, welche den Durchflusskanal (14) auf der Oberseite des Grundkörpers (1') umlaufend begrenzt und beim Befestigen der Deckplatte (12) auf dem Grundkörper (1') dichtend an die Deckplatte (12) anpresst, wobei der Grundkörper (1') im Zweikomponenten-Spritzgussverfahren mit einem ersten und einem zweiten Bereich (10, 11) gebildet wird, die jeweils aus einem unterschiedlichen Material bestehen und miteinander verbunden sind, wobei der Durchflusskanal (14) im ersten Bereich (11) ausgebildet wird, der im Vergleich zum zweiten Bereich (10) aus einem wesentlich elastischeren Material besteht und dass der zweite Bereich (10) eine Oberfläche umfasst, welche eine Oberflächenebene (217) definiert, wobei die Oberflächenebene (217) vor dem Befestigen der Deckplatte (12) zwischen der Ebene eines Kanalbetts (141) des Durchflusskanals (14) und den über die Oberfläche des zweiten Bereichs (10) hinaus ragenden Dichtungslippen (15) liegt, wobei die Deckplatte (12) nach dem Befestigen der Deckplatte (12) auf der Oberflächenebene (217) aufliegt, und dass der Durchflusskanal (14) auf dem Kanalbett (141) auf der Oberseite des Grundkörpers (1') so ausgebildet wird, dass der Durchflusskanal (14) im Querschnitt jeweils seitlich durch die vom Kanalbett (141) hoch stehenden Dichtungslippen (15) und von einem den Durchflusskanal (14) umlaufenden Aussenkanal (18) abgegrenzt wird.

9. Verfahren nach Anspruch 8, **dadurch gekennzeichnet, dass** das Durchflusssensorelement (13) so in die Deckplatte (12) eingelassen wird, dass es beim Befestigen der Deckplatte (12) über den Durchflusskanal (14) zu liegen kommt und mit der Deckplatte (12) eine im Wesentlichen plane Decke des Durchflusskanals (14) bildet.

## Claims

1. A flow sensor (1), comprising:
a base member (1') with a flow channel (14),
a flow sensor element (13, 134) adjoining the flow channel (14), and
a cover plate (12) being attached to the base member (1') and covering the flow channel (14),
the flow channel (14) being formed by a sealing lip (15), which surrounds and defines the flow channel (14) on a top side of the main body (1') being opposite to the cover plate (12) and is pressed sealingly against the cover plate (12),
wherein the base member (1') is formed of a first and a second region (10, 11), which consist in each case of a different material and are joined together, wherein the flow channel (14) is formed in the first region (11), which consists of a significantly more resilient material than the second region (10), and in that the second region (10) comprises a surface, which defines a surface plane (217),
wherein the cover plate (12) lies on the surface plane (217) when the cover plate (12) is attached to the base member (1'),
**characterized in that** the surface plane (217) lies between the plane of a channel bed (141) of the flow channel (14) and the sealing lips (15) projecting beyond the surface of the second region (10) when the cover plate (12) is removed, and
**in that** the flow channel (14) is formed on the channel bed (141) on the top side of the base member (1') in such a way that the flow channel (14) is delimited in cross-section in each case laterally by the sealing lips (15) projecting upwards from the channel bed (141) and from an outer channel (18) surrounding the flow channel (14).

2. The flow sensor (1) as claimed in claim 1, **characterized in that** the base member (1') comprises ports (100) formed in the second region (10) for a flow medium, which ports (100) are in each case connected to one of the ends of the flow channel (14) by way of a bore (101, 102).

3. The flow sensor (1) as claimed in one of claims 1 to 2, **characterized in that** the flow sensor element (13) is set into a recess (130) in the cover plate (12) above the flow channel (14) and, with the cover plate (12), forms a substantially flat ceiling for the flow channel (14), wherein an insulating filler material fills the remaining recess (130) level with the cover plate.

4. The flow sensor (1) as claimed in claim 3, **characterized in that** at least one groove (231) is provided in the cover plate (12) which runs substantially across the fluid channel direction, which groove leads out of the flow channel through under the sealing lip (15) when the flow sensor (1) is closed, in particular to accommodate a signal conductor.

5. The flow sensor (1) as claimed in claim 3, **characterized in that** the recess (130) is configured in the cover plate (12) such that it leads laterally out of the flow channel under at least one of the sealing lips (15) when the flow sensor (1) is closed, **in that** in this recess a sensor element (13) with at least one active sensor surface (134) is accommodated, and **in that** the sensor element (13) has signal conductors (331) which extend between the at least one active sensor surface (134) and the space next to the sealing lips (15) for leadthrough of the signal.

6. The flow sensor (1) as claimed in one of claims 1 to 5, **characterized in that** the sealing lip (15) tapers at the end remote from the top side of the base member (1') when the cover plate (12) is removed.

7. The flow sensor (1) as claimed in one of claims 1 to 6, **characterized in that** the flow channel (14) on the top side of the base member (1') is formed so as to take a repeatedly meandering path, with smooth defining surfaces and a constant cross-section, and brings about laminar flow through the flow channel (14).

8. A method for the production of a flow sensor (1) according to any one of the preceding claims, comprising:
providing a base member (1') with a flow channel (14),
arranging a flow sensor element (13) adjoining the flow channel (14), and
covering the flow channel (14) by attaching a cover plate (12) to the base member (1'),
**characterized in that**
the base member (1') is produced by means of injection molding in such a way that a sealing lip (15) is formed on the top side of the base member (1') being opposite to the cover plate (12), which sealing lip surrounds and defines the flow channel (14) on the top side of the main body (1') and presses sealingly against the cover plate (12) when the cover plate (12) is attached to the base member (1'), wherein the base member (1') is formed by a two-component injection molding method with a first and a second region (10, 11), which consist in each case of a different material and are joined together, wherein the flow channel (14) is formed in the first region (11), which consists of a significantly more resilient material than the second region (10), and **in that** the second region (10) comprises a surface, which defines a surface plane (217), wherein the surface plane (217) lies between the plane of a channel bed (141) of the flow channel (14) and the sealing lips (15) projecting beyond the surface of the second region (10) before attaching the cover plate (12), wherein the cover plate (12) lies on the surface plane (217) after the cover plate (12) is attached, and
**in that** the flow channel (14) is formed on the channel bed (141) on the top side of the base member (1') in such a way that the flow channel (14) is delimited in cross-section in each case laterally by the sealing lips (15) projecting upwards from the channel bed (141) and from an outer channel (18) surrounding the flow channel (14).

9. The method as claimed in claim 8, **characterized in that** the flow sensor element (13) is set into the cover plate (12) in such a way that it comes to lie over the flow channel (14) when the cover plate (12) is attached and, with the cover plate (12), forms a substantially flat ceiling for the flow channel (14).

## Revendications

1. Un capteur de débit (1), comprenant:
un corps de base (1') avec une conduite de passage (14),
un élément capteur de débit (13, 134) adjacent à la conduite de passage (14), et
une plaque de recouvrement (12) disposée sur le corps de base (1') et recouvrant la conduite de passage (14),
où la conduite de passage (14) est formée par une lèvre d'étanchéité (15) qui délimite en circonférence la conduite de passage (14) sur une face supérieure du corps de base (1') tournée vers la plaque de recouvrement (12) et qui est pressée en étanchéité contre la plaque de recouvrement (12),
où le corps de base (1') est formé d'un premier un second domaine (10, 11), qui sont respectivement formés de matériaux différents et qui sont reliés l'un à l'autre, où la conduite de passage (14) est formée dans le premier domaine (10) qui en comparaison au second domaine est constitué d'un matériau sensiblement plus élastique, et que le second domaine (10) comprend une surface, laquelle définit un plan de surface (217), où la plaque de recouvrement (12) repose sur le plan de surface (217), lorsque la plaque de recouvrement (12) est fixée au plan de surface (217), **caractérisé en ce que** le plan de surface (217), lorsque la plaque de recouvrement (12) est enlevée, se situe entre le plan d'un fond de conduite (141) de la conduite de passage (14) et des lèvres d'étanchéité (15) dépassant la surface du deuxième domaine (10), et que la conduite de passage (14) est formée sur le fond de conduite (141) du côté supérieur du corps de base (1') de telle sorte que la conduite de passage (14) est délimitée respectivement en section transversale latéralement par les lèvres d'étanchéité (15) faisant saillie vers le haut à partir du fond de conduite (141) et par une conduite extérieure (18) contournant la conduite de passage (14).

2. Un capteur de débit (1) selon la revendication 1, caractérisé en e que le corps de base (1') comporte des connexions formées dans le deuxième domaine (10) pour un agent d'écoulement, lesquelles connexions sont reliées à travers une perforation (101, 102) avec une des extrémités de la conduite de passage (14).

3. Un capteur de débit (1) selon une des revendications 1 à 2, **caractérisé en ce que** l'élément capteur de débit (13) est logé au-dessus de la conduite de passage (14) dans un évidement (130) dans la plaque de recouvrement (12) et forme avec la plaque de recouvrement (12) un plafond sensiblement plan de la conduite de passage (14), où un matériau de remblai isolant remplit l'évidement restant (130) de manière plane avec la plaque de recouvrement.

4. Un capteur de débit (1) selon la revendication 3, **caractérisé en ce que** dans la plaque de recouvrement (12) dispose d'une rainure (231) s'étendant au moins sensiblement perpendiculairement par rapport à la direction de conduite de fluide, qui sort de la conduite de passage (14) par dessous et de l'autre coté de la lèvre d'étanchéité (15) lorsque le capteur de débit (1) est fermé, en particulier pour la réception d'un conducteur de signal.

5. Un capteur de débit (1) selon la revendication 3, **caractérisé en ce que** l'évidement (130) dans la plaque de recouvrement (12) est conçu de sorte que lorsque le capteur de débit (1) est fermé, celui-ci sort par dessous d'au moins une des lèvres d'étanchéité (15) et latéralement hors de la conduite de passage, au moins dans cet évidement un élément de capteur (13) avec au moins une surface de capteur (134) active est logé, que l'élément de capteur (13) présente des conducteurs de signal (331), qui s'étendent entre au moins une surface de capteur (134) active et l'espace à côté des lèvres d'étanchéité (15) pour faire sortir le signal.

6. Un capteur de débit (1) selon une des revendications 1 à 5, **caractérisé en ce que** la lèvre d'étanchéité (15) est effilée au niveau de l'extrémité éloignée de la surface supérieure du corps de base (1') lorsque la plaque de recouvrement est enlevée (12).

7. Un capteur de débit (1) selon une des revendications 1 à 6, **caractérisé en ce que** la conduite du passage (14) est formée sur le côté supérieur du corps de base (1') avec un cours en méandres à plusieurs reprises, avec des surfaces de délimitation lisses et avec coupe transversale constante et mène à un écoulement laminaire à travers la conduite de passage (14).

8. Un procédé pour la fabrication d'un capteur de débit (1) selon une des revendications précédentes, comprenant:
mise à disposition d'un corps de base (1') avec une conduite de passage (14),
disposer un élément capteur de débit (13) de manière adjacente à la conduite de passage (14), et
recouvrir la conduite du passage (14) par fixation d'une plaque de recouvrement (12) sur le corps de base (1'),
**caractérisé en ce que**
le corps de base (1') est élaboré au moyen d'injection moulage, qu'une lèvre d'étanchéité est formé sur une face supérieure du corps de base (1') tournée vers la plaque de recouvrement (12), laquelle délimite la conduite de passage (14) en circonférence sur une face supérieure du corps de base (1') et qui presse en étanchéité contre la plaque de recouvrement (12) lorsque la plaque de recouvrement (12) est fixé au corps de base (1'), où le corps de base (1') est formé au moyen d'injection moulage à deux composants, avec un premier et un deuxième domaine (10, 11), lesquels sont constitués respectivement de matériaux différents et reliés l'un à l'autre, où la conduite de passage (14) est formée dans un premier domaine (11), qui en comparaison au deuxième domaine (10) est constitué d'un matériau sensiblement plus élastique et que le deuxième domaine (10) comporte une surface, qui définit un plan de surface (217), où le plan de surface (217) se situe entre le plan d'un fond de conduite (141) de la conduite de passage (14) et des lèvres d'étanchéité (15) dépassant la surface du deuxième domaine (10) avant la fixation de la plaque de recouvrement (12), où la plaque de recouvrement (12) repose sur le plan de surface (217) après la fixation de la plaque de recouvrement (12) et que la conduite de passage (14) est formée sur le fond de conduite (141) du côté supérieur du corps de base (1') de sorte que la conduite de passage (14) est délimitée en section transversale latéralement par les lèvres d'étanchéité (15) faisant saillie vers le haut à partir du fond de conduite (141) et par une conduite extérieure (18) contournant la conduite de passage (14).

9. Un procédé selon la revendication 8, caractérisé en en ce que l'élément de capteur de débit (13) est logé de telle manière dans la plaque de recouvrement (12), que lors de la fixation de plaque de recouvrement (12) sur la conduite de passage (14) celui-ci vient se coucherr et forme un plafond sensiblement plan de la conduite de passage (14) avec la plaque de recouvrement (12).
